# EUROPÄISCHE PATENTSCHRIFT

(11) **EP 2 934 956 B1**
(45) Veröffentlichungstag und Bekanntmachung des Hinweises auf die Patenterteilung: **12.02.2020**
(21) Anmeldenummer: 13814514.9
(22) Anmeldetag: 18.12.2013
(51) Int. Cl.: B60R 25/24

(54) **KOMMUNIKATIONSEINHEIT, SYSTEM MIT EINER KOMMUNIKATIONSEINHEIT SOWIE VERFAHREN FÜR EINE ÜBERPRÜFUNG EINER ZUGANGSBERECHTIGUNG**
COMMUNICATION UNIT, SYSTEM WITH A COMMUNICATION UNIT AND METHOD FOR VERIFYING AN ENTRY PERMISSION
UNITÉ DE COMMUNICATION, DISPOSITIF COMPRENANT UNE UNITÉ DE COMMUNICATION ET PROCÉDÉ DE CONTRÔLE D'UN DROIT D'ENTRER

(30) Priorität: 20.12.2012 DE 102012112811
(43) Veröffentlichungstag der Anmeldung: 28.10.2015
(73) Patentinhaber: Huf Hülsbeck & Fürst GmbH & Co. KG, 42551 Velbert (DE)
(72) Erfinder: SCHINDLER, Mirko, 42549 Velbert (DE); MÜLLER, Ulrich, 42549 Velbert (DE); WITTE, Martin, 48683 Ahaus (DE); KALESSE, Michael, 40885 Ratingen (DE); MÜLLER, Dirk, 45359 Essen (DE)
(74) Vertreter: Vogel, Andreas
(86) Internationale Anmeldenummer: PCT/EP2013/077129
(87) Internationale Veröffentlichungsnummer: WO 2014/096026

(56) Entgegenhaltungen:
- EP-A1- 2 381 392
- EP-A2- 1 619 633
- EP-B1- 2 171 867
- CN-A- 102 673 517
- DE-A1- 19 832 911
- DE-A1-102006 022 610
- DE-A1-102007 012 805
- US-A- 5 441 416

## Beschreibung

Die Erfindung betrifft eine Kommunikationseinheit eines Sicherheitssystems eines Kraftfahrzeuges, die in Kommunikation mit einem mobilen Identifikationsgeber bringbar ist. Zudem bezieht sich die Erfindung auf ein System mit einer Kommunikationseinheit eines Sicherheitssystems eines Kraftfahrzeuges sowie auf ein Verfahren für eine Überprüfung einer Zugangsberechtigung eines Kraftfahrzeuges, insbesondere für eine Überprüfung einer Berechtigung zum Ver- und Entriegeln eines beweglichen Teils eines Kraftfahrzeuges, insbesondere einer Kraftfahrzeugtür, einer Heckklappe, eines Kofferraumdeckels, eines Tankdeckels etc.

Aus der DE 103 34 625 A1 ist eine Sicherheitsvorrichtung zum Nachweis einer Berechtigung zum Ver- und Entriegeln eines Kraftfahrzeuges beschrieben, wobei eine Sende- und Empfangseinheit ein Anforderungssignal aussendet und, falls ein beweglicher und insbesondere tragbarer Identifikationsgeber dieses Anforderungssignal empfängt, das wiederum nach dem Empfang in der genannten Sende- und Empfangseinheit ausgewertet wird. Im Fall einer vorliegenden und erkannten Berechtigung des Identifikationsgebers gibt eine Steuereinrichtung in dem Kraftfahrzeug einen Steuerbefehl aus, der beispielsweise ein Entriegeln oder Verriegeln des Kraftfahrzeuges. Die DE102007012805A offenbart eine Kommunikationseinheit nach dem Oberbegriff des Anspruchs 1 und ein Kraftfahrzeug nach dem Oberbegriff des Anspruchs 6.

Es ist Aufgabe der vorliegenden Erfindung, eine Kommunikationseinheit, ein System sowie ein Verfahren der vorstehend genannten Art weiterzubilden, wobei der Komfort für den Benutzer verbessert und die Sicherheit erhöht wird.

Zur Lösung dieser Aufgabe wird eine Kommunikationseinheit mit sämtlichen Merkmalen des Patentanspruches 1 vorgeschlagen. Zudem wird zur Lösung der oben genannten Aufgabe ein Kraftfahrzeug mit sämtlichen Merkmalen des Patentanspruches 6 sowie ein Verfahren gemäß sämtlicher Merkmale des Patentanspruches 13 vorgeschlagen. In den abhängigen Patentansprüchen sind bevorzugte Weiterbildungen ausgeführt.

Erfindungsgemäß wird eine Kommunikationseinheit eines Sicherheitssystems eines Kraftfahrzeuges vorgeschlagen, die in Kommunikation mit einem mobilen Identifikationsgeber bringbar ist, wobei die Kommunikationseinheit mit einem Kommunikationsmittel, das ein erstes und ein zweites Kommunikationselement aufweist, und einem elektronischen Einkoppelelement ausgeführt ist, mit dem Energie in das zweite Kommunikationselement einbringbar ist. Über das erste Kommunikationselement ist ein elektromagnetisches Feld aufbaubar, wodurch eine Datenkommunikation mit dem mobilen Identifikationsgeber erzielbar ist. Das erste Kommunikationselement ist derart ausgeführt, dass es in einem für einen Benutzer sichtbaren Bauteil des Kraftfahrzeuges anordbar ist und das zweite Kommunikationselement in einem für den Benutzer unsichtbaren Bauteil des Kraftfahrzeuges befestigbar ist. Ein wesentlicher Kern der Erfindung ist, dass das erste Kommunikationselement, von dem das elektromagnetische Feld ausgeht, in einem für den Benutzer zugänglichen und/oder sichtbaren Bauteil positioniert ist. Der Benutzer kann den mobilen Identifikationsgeber, den er bei sich trägt, in die Nähe des ersten Kommunikationselementes führen, sodass sich der mobile Identifikationsgeber im elektromagnetischen Feld des ersten Kommunikationselements befindet. Anschließend kann eine Datenkommunikation zwischen dem mobilen Identifikationsgeber und dem Kommunikationsmittel, insbesondere dem ersten Kommunikationselement, stattfinden, in der insbesondere eine Authentifizierungsabfrage erfolgt, inwieweit der Benutzer für einen Zugang ins Kraftfahrzeug berechtigt ist, insbesondere berechtigt ist, das Kraftfahrzeug zu ver- und/oder entriegeln. Während dieser Datenkommunikation erfolgt eine Codeabfrage, wobei vorteilhafterweise der Berechtigungscode vom mobilen Identifikationsgeber über das elektromagnetische Feld zur kraftfahrzeugseitigen Kommunikationseinheit übergeht. Die Überprüfung der Berechtigung erfolgt kraftfahrzeugseitig in der Kommunikationseinheit, beispielsweise in der Bordelektronik des Kraftfahrzeuges, die mit der Kommunikationseinheit in Verbindung steht.

Ebenfalls ist es denkbar, dass die Kommunikationseinheit und/oder das Sicherheitssystem des Kraftfahrzeuges eine Steuereinheit oder Schaltung aufweist, die für eine entsprechende Überprüfung der genannten Berechtigung sorgt. Das erste Kommunikationselement kann zum Beispiel im sichtbaren Bauteil des Kraftfahrzeuges integriert sein, sodass das erste Kommunikationselement nicht unmittelbar vom Benutzer zu erkennen ist. Vorteilhafterweise ist das sichtbare Bauteil des Kraftfahrzeuges, in dem das erste Kommunikationselement angeordnet ist, aus einem nicht metallischen Material, insbesondere aus einem Kunststoff, einem Glas etc. ausgeführt. Ein Vorteil hierfür ist, dass somit ein geeignetes elektromagnetisches Feld aufbaubar ist, ohne dass Störeinflüsse das elektromagnetische Feld verändern, manipulieren etc. können. Das unsichtbare Bauteil des Kraftfahrzeuges, in dem das zweite Kommunikationselement angeordnet ist, kann zum Beispiel verbaut innerhalb des Kraftfahrzeuges angeordnet sein. Zum Beispiel kann das unsichtbare Bauteil ein Trägerelement innerhalb der Kraftfahrzeugtür sein. Das Trägerelement kann zum Beispiel innerhalb der Kraftfahrzeugtürverkleidung verlaufen. Zudem ist es denkbar, dass das Trägerelement ein Bestandteil einer Handhabe eines Kraftfahrzeuges ist, die einen von außen zugänglichen Türgriff und einen Montageträger (=Trägerelement) aufweist, an dem der Türgriff innenseitig der Kraftfahrzeugtür befestigt ist. Das elektronische Einkoppelelement ist beispielsweise am Montageträger befestigt, beispielsweise über eine Rastverbindung, Clipsverbindung oder eine form- und/oder kraft- und/oder stoffschlüssige Verbindung. Über eine entsprechende Leistungsversorgung, die mit dem Einkoppelelement verbunden ist, kann Energie in das zweite Kommunikationselement eingebracht werden, beispielsweise über ein weiteres elektromagnetisches Feld. Diese Energie wird vom zweiten Kommunikationselement, das vorteilhafterweise beabstandet und kontaktlos zum Einkoppelelement angeordnet ist, zum ersten Kommunikationselement weitergeleitet, das wiederum das elektromagnetische Feld zur Datenkommunikation mit dem mobilen Identifikationsgeber aufbaut. Da insbesondere das sichtbare Bauteil des Kraftfahrzeuges bewegbar zum unsichtbaren Bauteil des Kraftfahrzeuges, an dem das Einkoppelelement befestigt ist, ist, ist eine kontaktlose Anordnung des Einkoppelelementes zum zweiten Kommunikationselement vorteilhaft.

Vorteilhafterweise kann das erste und/oder das zweite Kommunikationselement und/oder das Einkoppelelement jeweils als Spule ausgebildet sein. Die Spule kann ihre Funktionsweise als Antenne, Transponder etc. haben. Beispielsweise kann die Spule kreisförmig, spiralförmig, oval oder drei- und viereckig ausgebildet sein. Das erste und/oder das zweite Kommunikationselement und/oder das Einkoppelelement können die Form einer Leiterschleife aus gewickeltem Draht aufweisen oder als gedruckte Schaltung mit mindestens einer leitfähigen Schicht eines Leiterplattenmaterials oder dergleichen ausgeführt sein.

Zudem kann die erfindungsgemäße Kommunikationseinheit mit umfassen, dass ein Näherungssensor vorgesehen ist, der elektronisch mit dem Kommunikationsmittel in Datenverbindung steht, insbesondere dass der Näherungssensor im sichtbaren Bauteil des Kraftfahrzeuges befestigbar ist und/oder dass der Nährungssensor ein kapazitiver Sensor ist. Der Näherungssensor kann an dem gleichen, identischen sichtbaren Bauteil des Kraftfahrzeuges angeordnet sein wie das erste Kommunikationselement. Alternativ ist es ebenfalls denkbar, dass das erste Kommunikationselement sowie der Näherungssensor an unterschiedlichen, sichtbaren Bauteilen des Kraftfahrzeuges angeordnet sind. In beiden Fällen erfolgt eine Datenverbindung über das Einkoppelelement.

Vorteilhafterweise ist das elektromagnetische Feld durch Induktion erzeugbar und/oder die Einbringung der Energie in das zweite Kommunikationselement erfolgt durch Induktion. Das bedeutet zum Beispiel, dass eine Leistungsversorgung in den mobilen Identifikationsgeber induktiv erfolgen kann. Das gleiche gilt für die induktive Einkopplung vom elektronischen Einkoppelelement in das Kommunikationsmittel.

Zudem kann erfindungsgemäß die Kommunikationseinheit mit einer Schaltung vorgesehen sein, die in einem aktiven Modus derart geschaltet ist, dass in definierten Zeitabständen das elektromagnetische Feld aufgebaut und abgebaut wird. Erfolgt eine Bewegung des mobilen Identifikationsgebers in das elektromagnetische Feld, wird eine Datenkommunikation zwischen dem mobilen Identifikationsgeber und dem kraftfahrzeugseitigen Kommunikationsmittel gestartet, in dem unter anderem auch eine Überprüfung der Zugangsberechtigung, wie bereits oben beschrieben, durchgeführt wird.

Ebenfalls ist es denkbar, dass erfindungsgemäß eine Schaltung in der Kommunikationseinheit vorgesehen ist, die in einem passiv Modus derart geschaltet ist, dass das elektromagnetische Feld erst dann aufgebaut wird, wenn ein kraftfahrzeugseitiger Näherungssensor eine Annäherung an das Kraftfahrzeug sensiert hat. Das bedeutet, dass die Kommunikationseinheit so lange "schläft", bis der Näherungssensor eine Annäherung an das Kraftfahrzeug detektiert hat. Anschließend wird über ein entsprechendes Signal die Schaltung derart angesteuert, dass das erste Kommunikationselement ein elektromagnetisches Feld aufbaut, um eine entsprechende Datenkommunikation mit dem mobilen Identifikationsgeber zu ermöglichen, und zwar dann, wenn sich der mobile Identifikationsgeber in dem elektromagnetischen Feld befindet.

In einer die Erfindung verbessernden Maßnahme kann das erste Kommunikationselement die Funktion einer Sende-und/oder Empfangseinheit aufweisen, um Daten über das elektromagnetische Feld auszutauschen. Auch das zweite Kommunikationselement und/oder das elektronische Einkoppelelement können die Funktion einer Sende- und/oder Empfangseinheit aufweisen.

Weiterhin kann ein Vorteil der Erfindung sein, dass das Kommunikationsmittel derart ausgeführt ist, dass das elektromagnetische Feld eine Reichweite von weniger als 11 cm hat, insbesondere dass Daten über das elektromagnetische Feld gemäß eines NFC-Protokolls übertragbar sind. Bei der Near Field Communication erfolgt im Nahbereich eine Datenkommunikation, insbesondere ein Austausch von Daten, wobei der mobile Identifikationsgeber kontaktlos und beabstandet zum ersten Kommunikationselement sich befindet. Die Kommunikation kann kryptografisch, insbesondere verschlüsselt erfolgen. Vorteilhafterweise erfolgt die Datenkommunikation zwischen dem mobilen Identifikationsgeber und dem ersten Kommunikationselement in einem Frequenzbereich von 13,56 MHz, wobei die Datenübertragungsraten bis zu 424 Kbit pro Sekunde sein können. Vorteilhafterweise zeichnet sich die NFC-Kommunikation durch ihre Schnelligkeit bei der Energieübertragung aus, wobei gleichzeitig die einzelnen Kommunikationselemente wenig Bauraum benötigen und zusätzlich in ihrer Funktionsweise wenig gestört werden können. Aufgrund der geringen Reichwerte des elektromagnetischen Feldes kann nahezu ein unerwünschtes Mitlesen der Datenkommunikation ausgeschlossen werden.

Erfindungsgemäß wird die Aufgabe durch ein System mit einer Kommunikationseinheit eines Sicherheitssystems eines Kraftfahrzeuges gelöst, die in Kommunikation mit einem mobilen Identifikationsgeber bringbar ist, wobei das System mit einem Kommunikationsmittel, das ein erstes und ein zweites Kommunikationselement aufweist, und einem elektronischen Einkoppelelement ausgebildet ist, das mit einer Leistungsversorgung verbunden ist und mit dem Energie in das zweite Kommunikationselement einbringbar ist. Über das erste Kommunikationselement ist ein elektromagnetisches Feld aufbaubar, wodurch eine Datenkommunikation mit dem mobilen Identifikationsgeber erzielbar ist, wobei das erste Kommunikationselement derart ausgeführt ist, dass es in einem für einen Benutzer sichtbaren Bauteil des Kraftfahrzeuges angeordnet ist und das zweite Kommunikationselement in einem für den Benutzer unsichtbaren Bauteil des Kraftfahrzeuges befestigt ist. Die geschilderten Vorteile bezüglich der Kommunikationseinheit ergeben sich auch bei dem erfindungsgemäßen System, sodass -um Wiederholungen zu vermeiden- an dieser Stelle lediglich darauf Bezug genommen wird.

Erfindungsgemäß kann das sichtbare Bauteil eine Fensterscheibe des Kraftfahrzeuges sein. Das Kommunikationsmittel befindet sich in der Fensterscheibe, wobei das erste Kommunikationselement im sichtbaren Teil der Fensterscheibe integriert sein kann. An dieser Stelle sei angemerkt, dass sich die Fensterscheibe in ihrer geschlossenen Position befindet, und gleichzeitig sich das erste Kommunikationselement im sichtbaren Fensterscheibenbereich befindet, wodurch eine zuverlässige Datenkommunikation mit dem mobilen Identifikationsgeber erzielbar ist. Das zweite Kommunikationselement kann sich ebenfalls in oder an der Fensterscheibe des Kraftfahrzeuges befinden, wobei das zweite Kommunikationselement verdeckt innerhalb der Kraftfahrzeugtür positioniert sein kann, und zwar dort, wo sich auch zumindest teilweise der nicht sichtbare Teil der Fensterscheibe befindet. Beide Kommunikationselemente können über ein Drahtelement miteinander verbunden sein, sodass ein Energieaustausch bzw. eine Energieweiterleitung zwischen beiden Kommunikationselementen möglich ist.

In einer weiteren, die Erfindung verbessernden Maßnahme kann ein Näherungssensor vorgesehen sein, der elektronisch mit dem Kommunikationsmittel in Datenverbindung steht, insbesondere kann der Näherungssensor im sichtbaren Bauteil des Kraftfahrzeuges befestigt sein und/oder der Näherungssensor kann ein kapazitiver Sensor sein. Der Näherungssensor kann beispielsweise dann Sinn machen, wenn bei einer Annäherung des Benutzers die Kommunikationseinheit "geweckt" werden soll bzw. zu aktivieren ist, um ausgehend vom ersten Kommunikationselement ein elektromagnetisches Feld aufzubauen, wodurch eine Datenkommunikation mit dem mobilen Identifikationsgeber möglich ist.

Der Näherungssensor kann zum Beispiel ebenfalls in der gleichen Fensterscheibe integriert sein, in der auch das erste Kommunikationselement positioniert ist. Ebenfalls schließt die Erfindung mit ein, dass der Näherungssensor an einem der Fensterscheibe unterschiedlichen Bauteil des Kraftfahrzeuges angeordnet ist, wie zum Beispiel an der Außenhaut des Kraftfahrzeuges, wie zum Beispiel an einem Türgriff des Kraftfahrzeuges.

Des Weiteren schließt die Erfindung mit ein, dass eine Handhabe des Kraftfahrzeuges vorgesehen ist, die einen von außen zugänglichen Türgriff und einen Montageträger, an dem der Türgriff befestigt ist, innenseitig der Kraftfahrzeugtür aufweist, wobei das Einkoppelelement an der Handhabe angeordnet ist und/oder der Näherungssensor am Türgriff oder an der Fensterscheibe angeordnet ist. Der Montageträger befindet sich innenseitig des Kraftfahrzeuges, insbesondere innerhalb der Türverkleidung, wobei der außenliegende Türgriff zuverlässig durch den Montageträger an der Tür gehalten ist. Der Montageträger kann unterschiedliche Funktionen aufweisen, insbesondere kann im Montageträger eine Crashsperre integriert sein, die verhindert, dass bei einem etwaigen Unfall die auf die Kraftfahrzeugtür wirkende Fliehkräfte ein ungewolltes Öffnen der Kraftfahrzeugtür bewirken. Zudem kann der Montageträger für einen bewegbaren Türgriff entsprechende Lagerstellen bieten. Somit verfügt der Montageträger vorteilhafterweise über eine gewisse körperliche Gestalt, dessen Konstruktion zusätzlich einen Befestigungsort für die Kommunikationseinheit, insbesondere für das Einkoppelelement bieten kann. Vorteilhafterweise kann das Kommunikationsmittel derart ausgebildet sein, dass das elektromagnetische Feld durch Induktion erzeugbar ist. Alternativ und/oder zusätzlich kann das Einkoppelelement derart ausgebildet sein, dass ein elektromagnetisches Feld durch Induktion vom Einkoppelelement erzeugbar ist.

Vorteilhafterweise kann der Identifikationsträger eine Sende- und/oder Empfangseinheit aufweisen, die in Datenkommunikation mit dem ersten Kommunikationselement der kraftfahrzeugseitigen Kommunikationseinheit bringbar ist, insbesondere kann die Sende- und/oder Empfangseinheit als Spule ausgeführt sein. Besonders vorteilhaft ist, dass das zweite Kommunikationselement dem Einkoppelelement beabstandet gegenüber steht, wobei insbesondere die Fensterscheibe bewegbar innerhalb der Kraftfahrzeugtür angeordnet ist. Aufgrund der bewegbaren Fensterscheibe zeichnet sich die Einkopplung des elektromagnetischen Feldes durch Induktion vom Einkoppelelement in das zweite Kommunikationselement als funktionssicher aus.

Zudem wird die oben genannte Aufgabe durch ein Verfahren für eine Überprüfung einer Zugangsberechtigung eines Kraftfahrzeuges gelöst, mit einer Kommunikationseinheit eines Sicherheitssystems eines Kraftfahrzeuges, die in Kommunikation mit einem mobilen Identifikationsgeber bringbar ist. Zudem umfasst das erfindungsgemäße Verfahren ein Kommunikationsmittel, das ein erstes und ein zweites Kommunikationselement umfasst. Das erste Kommunikationselement ist an einem sichtbaren Teil des Kraftfahrzeuges angeordnet und das zweite Kommunikationselement an einem nicht sichtbaren Teil des Kraftfahrzeuges. Beide Kommunikationselemente können an unterschiedlichen Bauteilen des Kraftfahrzeuges angeordnet sein oder an einem gemeinsamen Bauteil angeordnet sein, wie zum Beispiel an einer Fensterscheibe einer Kraftfahrzeugtür. Hierbei befindet sich das erste Kommunikationselement am sichtbaren Teil der Fensterscheibe und das zweite Kommunikationselement am nicht sichtbaren Teil der Fensterscheibe. Ferner ist ein elektronisches Einkoppelelement vorgesehen, das mit einer Leistungsversorgung verbunden ist, wobei das Verfahren folgende Schritte aufweist:
a) Einbringung von Energie über das Einkoppelelement in das zweite Kommunikationselement,
b) Übertragung der Energie zum ersten Kommunikationselement, das ein elektromagnetisches Feld aufbaut,
c) Datenkommunikation zwischen der Kommunikationseinheit und dem Identifikationsgeber, wobei ein vom Identifikationsgeber zur Kommunikationseinheit gesendeter Code ausgewertet wird,
d) bei einem positiven Auswerteergebnis eine Zugangsberechtigung vorliegt und die Kommunikationseinheit ein definiertes Signal dem Sicherheitssystem übergibt.

Besonders vorteilhaft ist, dass der Bereich zwischen dem ersten Kommunikationselement und dem Identifikationsgeber, und zwar während der Datenkommunikation metallschichtlos ist, sodass das elektromagnetische Feld nahezu keinen Störungen ausgesetzt ist. Bei einem positiven Auswerteergebnis kann zum Beispiel bewirkt werden, dass das Sicherheitssystem eine Ent- und/oder Verriegelung eines beweglichen Teils eines Kraftfahrzeuges, insbesondere der Kraftfahrzeugtür, der Heckklappe, der Kofferraumheckklappe oder des Tankdeckels, vornimmt. Zusätzlich kann das Sicherheitssystem eine Fahrberechtigung verifizieren bzw. erkennen, sodass eine Wegfahrsperre des Kraftfahrzeuges deaktiviert wird.

Ebenfalls ist es denkbar, dass vor und/oder während Schritt c) der mobile Identifikationsgeber in die Nähe des ersten Kommunikationselementes gehalten wird. Zudem kann beim Schritt a) ein elektromagnetisches Feld zwischen dem Einkoppelelement und dem zweiten Kommunikationselement induziert wird.

Eine weitere, die Erfindung verbessernde Maßnahme kann vorsehen, dass beim Schritt b) ein elektromagnetisches Feld zwischen dem ersten Kommunikationselement und einer Sende- und/oder Empfangseinheit des Identifikationsgebers induziert wird. Vorteilhafterweise kann die Kommunikationseinheit eine Schaltung aufweisen, die in einem aktiven Modus derart geschaltet ist, dass in definierten Zeitabständen das elektromagnetische Feld aufgebaut und abgebaut wird. Ebenfalls ist es möglich, dass eine Schaltung vorgesehen ist, die in einem passiv Modus derart geschaltet ist, dass das elektromagnetische Feld erst dann aufgebaut wird, wenn der Näherungssensor eine Annäherung an das Kraftfahrzeug sensiert hat, insbesondere dass die Annäherung kapazitiv erfolgt.

Ferner umfasst die Erfindung, dass während des Schrittes b) die Kommunikationseinheit ein elektromagnetisches Feld erzeugt, wobei der Identifikationsgeber, der in das elektromagnetische Feld geführt wird, das elektromagnetische Feld moduliert, wodurch Schritt c) realisierbar ist. Das bedeutet, dass das elektromagnetische Feld, erzeugt durch das erste Kommunikationselement, durch den Identifikationsgeber verändert und/oder geschwächt und/oder gedämpft wird, welches im Sinne dieser Erfindung als Modulation definiert ist. Hierdurch lässt sich ein passiv moduliertes Signal erzeugen, wodurch eine Datenkommunikation zwischen dem mobilen Identifikationsgeber und dem ersten Kommunikationselement realisieren lässt. Eine Datenverschlüsselung ist ebenfalls im Rahmen der genannten Modulation denkbar.

Zudem umfasst die Erfindung den Gedanken, dass während des Schrittes b) die Kommunikationseinheit ein elektromagnetisches Feld erzeugt, wobei der Identifikationsgeber, der in das elektromagnetische Feld geführt wird, ein elektromagnetisches Feld erzeugt, das der Kommunikationseinheit gesendet wird, wodurch Schritt c) realisierbar ist. Folglich ist es denkbar, dass eine aktive Modulation gestartet wird, bei der der Identifikationsgeber ein "eigenes" elektromagnetisches Feld in Richtung Kommunikationseinheit, insbesondere in Richtung des ersten Kommunikationselementes erzeugt, wodurch eine Datenkommunikation zwischen der Kommunikationseinheit und dem Identifikationsgeber entsteht, einschließlich Überprüfung einer Zugangsberechtigung etc. Hierbei ist es denkbar, dass der Identifikationsgeber über das elektromagnetische Feld, erzeugt durch das erste Kommunikationselement, die Energie erhält, sein eigenes elektromagnetisches Feld aufzubauen. Ebenfalls ist es denkbar, dass der Identifikationsgeber eine eigene Leistungsversorgung aufweist, die dafür sorgt, dass ausgehend vom Identifikationsgeber ein eigenes elektromagnetisches Feld erzeugt werden kann.

Sowohl bei der passiven Modulation als auch bei der aktiven Modulation kann es vorteilhaft sein, dass das jeweilige elektromagnetische Feld induziert wird.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines Kraftfahrzeuges mit einem Sicherheitssystem einschließlich einer Kommunikationseinheit, die mit einem mobilen Identifikationsgeber in Datenkommunikation bringbar ist,
- Figur 2: eine schematische Ansicht einer Kommunikationseinheit, die mit einem mobilen Identifikationsgeber in Datenkommunikation bringbar ist,
- Figur 3: ein weiteres Ausführungsbeispiel einer Kommunikationseinheit mit einem mobilen Identifikationsgeber,
- Figur 4: ein weiteres Ausführungsbeispiel einer Kommunikationseinheit mit einem mobilen Identifikationsgeber und
- Figur 5: ein Ablaufdiagramm zur Überprüfung einer Zugangsberechtigung eines Kraftfahrzeuges.

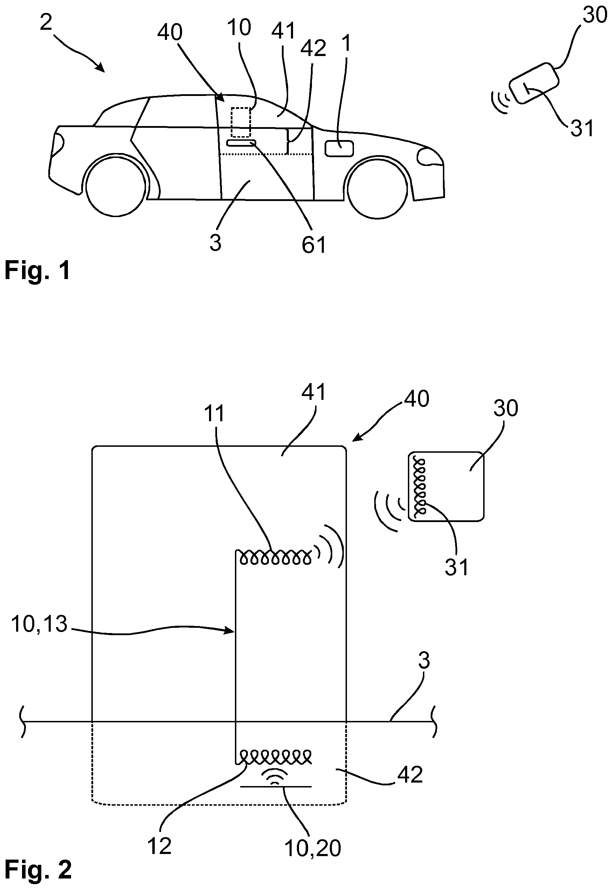

In Figur 1 ist ein Kraftfahrzeug 2 dargestellt, welches ein Sicherheitssystem 1 aufweist, welches eine Überprüfung einer Zugangsberechtigung in das Kraftfahrzeug 2 und/oder eine Fahrberechtigungsüberprüfung durchführen kann. Hierbei weist das Sicherheitssystem 1 eine Kommunikationseinheit 10 auf, die an einem Bauteil 40 des Kraftfahrzeuges 2 angeordnet ist. Gemäß Figur 2 bis Figur 4 sind mögliche Ausgestaltungen der Kommunikationseinheit 10 dargestellt, worauf im Folgenden eingegangen wird. Die in Figur 1 gezeigte Kommunikationseinheit 10 ist mit einem mobilen Identifikationsgeber 30 in Datenkommunikation bringbar. Während der Datenkommunikation erfolgt eine Überprüfung, inwieweit der Benutzer, der einen mobilen Identifikationsgeber 30 mit sich trägt, berechtigt ist, sich in das Kraftfahrzeug 2 zu begeben, insbesondere eine Entriegelung und/oder Verriegelung des Kraftfahrzeuges 2 auszulösen und/oder das Kraftfahrzeug 2 zu starten.

Während der Datenkommunikation zwischen dem mobilen Identifikationsgeber 30 und der Kommunikationseinheit 10 erfolgt eine Codeabfrage, die insbesondere auch verschlüsselt erfolgen kann.

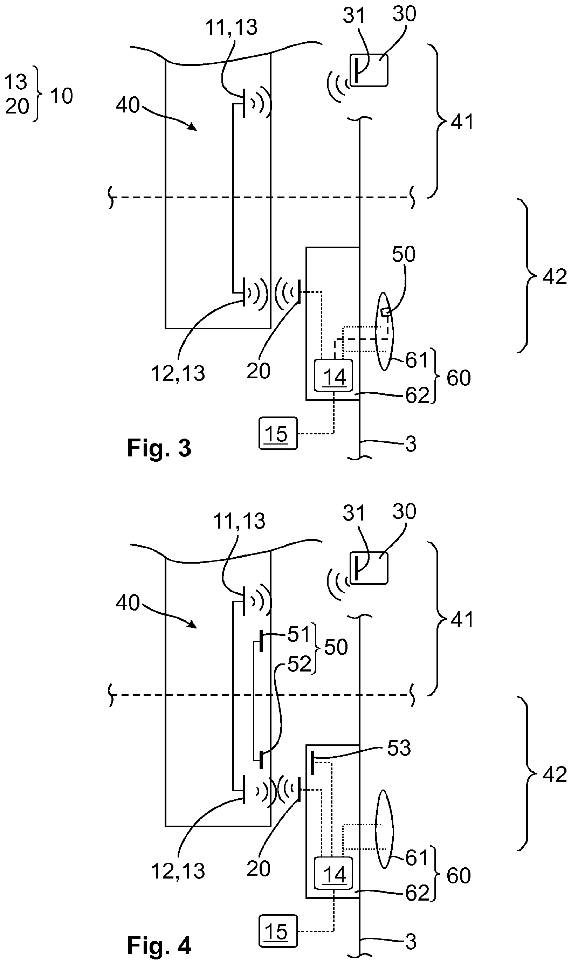

In einer möglichen Ausführungsform gemäß Figur 2 weist die Kommunikationseinheit 10 ein Kommunikationsmittel 13 auf, welches ein erstes Kommunikationselement 11 sowie eine zweites Kommunikationselement 12 aufweist. Zudem umfasst die Kommunikationseinheit 10 ein elektronisches Einkoppelelement 20, mit dem Energie in das zweite Kommunikationselement 12 einbringbar ist. Das Kommunikationsmittel 13 ist an einem Bauteil 40 des Kraftfahrzeuges 2 angeordnet, wobei in den gezeigten Ausführungsbeispielen das Bauteil 40 einen sichtbaren Bauteilbereich 41 sowie einen unsichtbaren Bauteilbereich 42 aufweist. Das Bauteil 40 ist in dem dargestellten Ausführungsbeispiel eine Fensterscheibe. Der unsichtbare Bereich der Fensterscheibe 42 befindet sich in der Verkleidung der Kraftfahrzeugtür 3 (siehe Figur 1 und Figur 2), wobei im sichtbaren Bauteilbereich der Fensterscheibe 41 das erste Kommunikationselement 11 sich befindet. Das zweite Kommunikationselement 12 ist ebenfalls in der Fensterscheibe 40 integriert, jedoch im unsichtbaren Bauteilbereich 42. Das elektronische Einkoppelelement 20 befindet sich in der unmittelbaren Nähe des zweiten Kommunikationselementes 12, wobei das zweite Kommunikationselement 12 sowie das Einkoppelelement 20 kontaktlos zueinander angeordnet sind. Figur 3 zeigt eine Seitenansicht, bei der ein definierter Abstand zwischen dem Einkoppelelement 20 und dem zweiten Kommunikationselement 12 besteht.

In einer möglichen Ausführungsvariante gemäß Figur 3 und Figur 4 kann das elektronische Einkoppelelement 20 innenseitig der Kraftfahrzeugtür 3, insbesondere in der Türverkleidung, befestigt sein. Im vorliegenden Ausführungsbeispiel weist das Kraftfahrzeug 2 eine Handhabe 60 auf, die einen von außen zugänglichen Türgriff 61 und einen Montageträger 62 aufweist, der innenseitig der Kraftfahrzeugtür 61 sich befindet. Der Türgriff 61 ist am innenseitigen Montageträger 62 verbunden. Beispielsweise ist es denkbar, dass der Montageträger 62 Lagerstellen für den Türgriff 61 bietet, wenn der Türgriff 61 von einem Benutzer betätigt, insbesondere gezogen wird, sodass der Türgriff 61 an der Kraftfahrzeugtür 3 verschwenken kann.

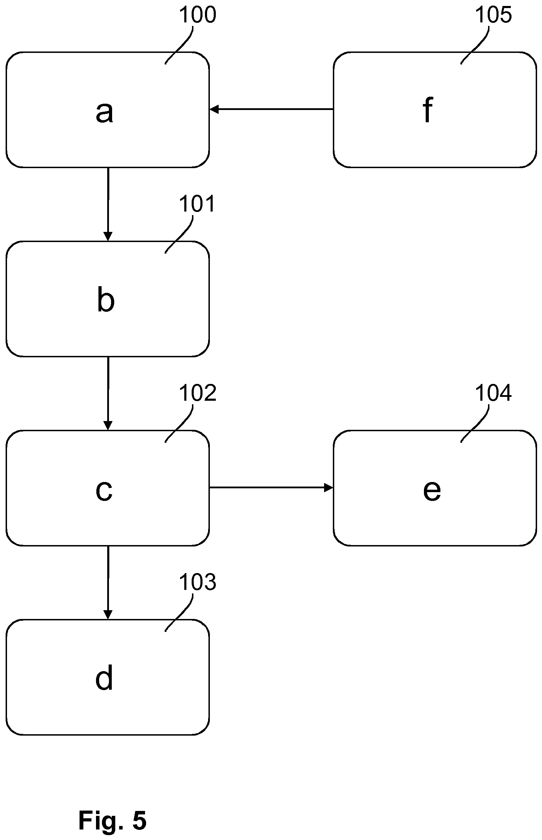

Gemäß Figur 3 und Figur 4 ist das Einkoppelelement 20 am Montageträger 62 befestigt, insbesondere über eine Rastverbindung und/oder Clipsverbindung am Montageträger 62 angeordnet. Die Kommunikationseinheit 10 ist des Weiteren mit einer Leistungsversorgung 15 verbunden, wobei die Leistungsversorgung 15 am Montageträger 62 oder beispielsweise an einer geeigneten Stelle innerhalb des Kraftfahrzeuges 2 angeordnet sein kann. Die Leistungsversorgung 15 sorgt dafür, dass Energie vom elektronischen Einkoppelelement 20 in das zweite Kommunikationselement 12 eingebracht werden kann. Gemäß der dargestellten Ausführungsbeispiele erfolgt die Energieeinkopplung vom elektronischen Einkoppelelement 20 zum zweiten Kommunikationselement 12 über ein elektromagnetisches Feld, welches induziert wird. Dieser Verfahrensschritt ist gemäß Figur 5 mit dem Bezugszeichen 100 gekennzeichnet.

Anschließend erfolgt eine Übertragung der Energie zum ersten Kommunikationselement 11, das ein elektromagnetisches Feld aufbaut, siehe Verfahrensschritt 101 gemäß Figur 5. Befindet sich der mobile Identifikationsgeber 30 innerhalb des elektromagnetischen Feldes, kann eine Datenkommunikation zwischen der Kommunikationseinheit 10, insbesondere dem ersten Kommunikationselement 11 und dem Identifikationsgeber 30 erfolgen, wobei ein vom Identifikationsgeber 30 zur Kommunikationseinheit 10 gesendeter Code ausgewertet wird, welches im Verfahrensschritt 102 gemäß Figur 5 gezeigt ist.

Bei einem positiven Auswerteergebnis liegt eine Zugangsberechtigung vor und die Kommunikationseinheit 10 übergibt ein definiertes Signal dem Sicherheitssystem 1, welches zum Beispiel einen Entriegelungsvorgang und/oder Verriegelungsvorgangs der Kraftfahrzeugtür 3 oder der Heckklappe oder des Tankdeckels vornehmen kann, welches schematisch im Verfahrensschritt 103 gemäß Figur 5 dargestellt ist. Falls ein negatives Auswerteergebnis vorliegt, erfolgt kein entsprechender Entriegelungs- und/oder Verriegelungsvorgang innerhalb des Kraftfahrzeuges 2, siehe Schritt 104. Gemäß Figur 2 bis Figur 4 kann das erste Kommunikationselement 11 und/oder das zweite Kommunikationselement 12 und/oder das Einkoppelelement 20 jeweils als Spule ausgebildet sein. Das elektromagnetische Feld, das bei der Kommunikation zwischen dem ersten Kommunikationselement 11 und einer Sende- und Empfangseinheit 31 des Identifikationsgebers 30 besteht oder das zwischen dem Einkoppelelement 20 und dem zweiten Kommunikationselement 12 aufgebaut wird, kann durch Induktion erzeugt sein.

Insbesondere ist das elektromagnetische Feld, welches zwischen der Sende- und/oder Empfangseinheit 31 des Identifikationsgebers 30 und dem ersten Kommunikationselement 11 aufgebaut wird, mit einer Reichweite von weniger als 11 cm ausgebildet, wobei vorteilhafterweise Daten über dieses elektromagnetische Feld gemäß eines NFC-Protokolls übertragen werden. Diese Übertragung gemäß einer Near Field Communication hat den Vorteil, dass wenig Energie verbraucht wird sowie es schwierig ist, dass Daten "abgehört" werden können.

Vorteilhafterweise weist das Ausführungsbeispiel gemäß Figur 2 und Figur 3 einen Näherungssensor 50 auf, der elektronisch mit dem Kommunikationsmittel 13 in Datenverbindung steht. Beispielsweise ist es gemäß Figur 3 denkbar, dass der Näherungssensor 50 in einem sichtbaren Bauteil 40, 60 des Kraftfahrzeuges 2 angeordnet ist. Beispielsweise ist der Näherungssensor 50 gemäß Figur 3 am Türgriff 61 vorgesehen. Gemäß Figur 4 ist der Näherungssensor 50 im sichtbaren Bereich 41 der Fensterscheibe 40 angeordnet. In beiden Ausführungsbeispielen kann der Näherungssensor 50 als kapazitiver Sensor ausgebildet sein. Gemäß Figur 3 und Figur 4 kann eine Schaltung 14 in der Kommunikationseinheit 10 integriert sein, die in einem passiv Modus derart geschaltet ist, dass das elektromagnetische Feld, welches zwischen dem mobilen Identifikationsgeber 30 und dem ersten Kommunikationselement 11 aufgebaut wird, erst dann entsteht, wenn der Näherungssensor 50 eine Annäherung eines Benutzers, insbesondere eines Identifikationsgebers 30 an das Kraftfahrzeug 2 sensiert. Dieses ist im Verfahrensschritt 105 gemäß Figur 5 gezeigt. Erst wenn eine positive Annäherung durch den Näherungssensor 50 erkannt wird, erfolgen die Verfahrensschritte 100 bis 103 gemäß Figur 5.

Der Näherungssensor 50 ist vorteilhafterweise mit der Schaltung 14 elektronisch verbunden. Gemäß Figur 4 ist der Näherungssensor 50 in der Fensterscheibe 40 des Kraftfahrzeuges 2 integriert. Dieser Näherungssensor 50 arbeitet kapazitiv, wobei ein erster Kondensator 51 im sichtbaren Bereich 41 der Fensterscheibe 40 angeordnet ist. Ein zweiter Kondensator 52 befindet sich im nicht sichtbaren Bereich 42 der Fensterscheibe 40. Falls sich nun der Benutzer dem ersten Kondensator 51 nähert, erfolgt in einem definierten Abstand zur Fensterscheibe 40 eine Detektion durch den ersten Kondensator 51, wobei der zweite Kondensator 52, der mit dem ersten Kondensator 51 elektrisch verbunden ist, dieses Erkennungssignal an die Schaltung 14 weiterleitet. Beispielsweise ist es denkbar, dass ein dritter Kondensator 53 dieses Erkennungssignal aufnimmt und der Schaltung 14 übermittelt. Anschließend sorgt die Schaltung 14 mit der Leistungsversorgung 15 dafür, dass Energie über das Einkoppelelement 20 in das Kommunikationsmittel 13 übertragen wird. Der dritte Kondensator 53 kann am Montageträger 62 angeordnet sein.

Ebenfalls ist es denkbar, dass das Erkennungssignal vom zweiten Kondensator 52 zum Einkoppelelement 20 übertragen wird, welches zuverlässig dieses Signal an die Schaltung 14 weiterleitet.

Alternativ ist es denkbar, dass eine Schaltung 14 in der Kommunikationseinheit 10 integriert ist, die in einem aktiven Modus derart geschaltet ist, dass in definierten Zeitabständen das elektromagnetische Feld zwischen dem Identifikationsgeber 30 und dem ersten Kommunikationselement 11 aufgebaut und abgebaut wird. Das bedeutet, dass die Kommunikationseinheit 10 in definierten Zeitabständen ständig das elektromagnetische Feld entstehen lässt, um festzustellen, inwieweit ein Identifikationsgeber 30 mit seiner Sende- und Empfangseinheit 31 sich in diesem Feld befindet.

Gemäß der dargestellten Ausführungsbeispiele kann der mobile Identifikationsgeber 30 Bestandteil eines Passiv-Entry-System sein oder als Mobiltelefon ausgebildet sein. Der Schritt 101 gemäß Figur 5 kann derart erfolgen, dass die Kommunikationseinheit 10 ein elektromagnetisches Feld erzeugt, wobei der Identifikationsgeber 30, der in das elektromagnetische Feld geführt wird, das elektromagnetische Feld moduliert, wodurch der Schritt 102 gemäß Figur 5 realisierbar ist. Alternativ kann der Schritt 101 gemäß Figur 5 derart erfolgen, dass die Kommunikationseinheit 10 ein elektromagnetisches Feld erzeugt, wobei der Identifikationsgeber 30, der in das elektromagnetische Feld geführt wird, ein eigenes elektromagnetisches Feld erzeugt, das der Kommunikationseinheit 10 gesendet wird, wodurch Schritt 102 gemäß Figur 5 realisierbar ist.

### Bezugszeichenliste

- 1: Sicherheitssystem
- 2: Kraftfahrzeug
- 3: Kraftfahrzeugtür

- 10: Kommunikationseinheit
- 11: erstes Kommunikationselement
- 12: zweites Kommunikationselement
- 13: Kommunikationsmittel
- 14: Schaltung
- 15: Leistungsversorgung

- 20: Einkoppelelement

- 30: Identifikationsgeber
- 31: Sende- und/oder Empfangseinheit

- 40: Bauteil, Fensterscheibe
- 41: sichtbares Bauteil, Fensterscheibe
- 42: unsichtbares Bauteil, Fensterscheibe

- 50: Näherungssensor
- 51: erster Kondensator
- 52: zweiter Kondensator
- 53: dritter Kondensator

- 60: Handhabe
- 61: Türgriff
- 62: Montageträger
- 100: Verfahrensschritt a
- 101: Verfahrensschritt b
- 102: Verfahrensschritt c
- 103: Verfahrensschritt d
- 104: Verfahrensschritt e
- 105: Verfahrensschritt f

## Patentansprüche

1. Kommunikationseinheit (10) eines Sicherheitssystems (1) eines Kraftfahrzeuges (2), die in Kommunikation mit einem mobilen Identifikationsgeber (30) bringbar ist, mit einem Kommunikationsmittel (13), das ein erstes (11) und ein zweites Kommunikationselement (12) aufweist,
einem elektronischen Einkoppelelement (20), mit dem Energie in das zweite Kommunikationselement (12) einbringbar ist, wobei diese Energie zum ersten Kommunikationselement (11) übertragbar ist, wobei
über das erste Kommunikationselement (11) ein elektromagnetisches Feld aufbaubar ist, wodurch eine Datenkommunikation mit dem mobilen Identifikationsgeber (30) erzielbar ist,
das erste Kommunikationselement (11) derart ausgeführt ist, dass es in einem für einen Benutzer sichtbaren Bauteilbereich (41) des Kraftfahrzeuges (2) anordbar ist und das zweite Kommunikationselement (12) in einem für den Benutzer unsichtbaren Bauteilbereich (42) des Kraftfahrzeuges (2) befestigbar ist, wobei Energie über das Einkoppelelement (20) in das zweite Kommunikationselement (12) einbringbar ist, wobei das zweite Kommunikationselement (12) sowie das Einkoppelelement (20) kontaktlos zueinander angeordnet sind, **dadurch gekennzeichnet, dass** eine Schaltung (14) vorgesehen ist, die in einem aktiven Modus derart geschaltet ist, dass in definierten Zeitabständen das elektromagnetische Feld aufgebaut und abgebaut wird oder dass eine Schaltung (14) vorgesehen ist, die in einem passiv Modus derart geschaltet ist, dass das elektromagnetische Feld erst dann aufgebaut wird, wenn ein Näherungssensor (50) eine Annäherung an das Kraftfahrzeug (2) sensiert hat, wobei der Näherungssensor (50) elektronisch mit dem Kommunikationsmittel (13) in Datenverbindung steht.

2. Kommunikationseinheit (10) nach Anspruch 1,
**dadurch gekennzeichnet,**
**dass** das erste (11) und/oder das zweite Kommunikationselement (12) und/oder das Einkoppelelement (20) jeweils als Spule ausgebildet sind.

3. Kommunikationseinheit (10) nach Anspruch 1 oder 2,
**dadurch gekennzeichnet,**
**dass** ein Näherungssensor (50) vorgesehen ist, der elektronisch mit dem Kommunikationsmittel (13) in Datenverbindung steht, insbesondere dass der Näherungssensor (50) im sichtbaren Bauteilbereich (41) des Kraftfahrzeugs (2) befestigbar ist und/oder dass der Näherungssensor (50) ein kapazitiver Sensor ist.

4. Kommunikationseinheit (10) nach einem der vorhergehenden Ansprüche,
**dadurch gekennzeichnet,**
**dass** das elektromagnetische Feld durch Induktion erzeugbar ist und/oder die Einbringung der Energie in das zweite Kommunikationselement (12) durch Induktion erfolgt.

5. Kommunikationseinheit (10) nach einem der vorhergehenden Ansprüche,
**dadurch gekennzeichnet,**
**dass** das erste Kommunikationselement (11) die Funktion einer Sende-und/oder Empfangseinheit (31) aufweist, um Daten über das elektromagnetische Feld auszutauschen und/oder dass das Kommunikationsmittel (13) derart ausgeführt ist, dass das elektromagnetische Feld eine Reichweite von weniger als 11 cm hat, insbesondere dass Daten über das elektromagnetische Feld gemäß eines NFC-Protokolls übertragbar sind.

6. Kraftfahrzeug (2) mit einer Kommunikationseinheit (10) eines Sicherheitssystems (1), die in Kommunikation mit einem mobilen Identifikationsgeber (30) bringbar ist, mit einem Bauteil (40), einem Kommunikationsmittel (13), das ein erstes (11) und ein zweites Kommunikationselement (12) aufweist,
einem elektronischen Einkoppelelement (20), das mit einer Leistungsversorgung (15) verbunden ist und mit dem Energie in das zweite Kommunikationselement (12) einbringbar ist, wobei diese Energie zum ersten Kommunikationselement (11) übertragbar ist, wobei
über das erste Kommunikationselement (11) ein elektromagnetisches Feld aufbaubar ist, wodurch eine Datenkommunikation mit dem mobilen Identifikationsgeber (30) erzielbar ist,
das erste Kommunikationselement (11) derart ausgeführt ist, dass es in einem für einen Benutzer sichtbaren Bauteilbereich (41) des Kraftfahrzeuges (2) angeordnet ist und das zweite Kommunikationselement (12) in einem für den Benutzer unsichtbaren Bauteilbereich (42) des Kraftfahrzeuges (2) befestigt ist, wobei Energie über das Einkoppelelement (20) in das zweite Kommunikationselement (12) einbringbar ist, wobei das zweite Kommunikationselement (12) sowie das Einkoppelelement (20) kontaktlos zueinander angeordnet sind, **dadurch gekennzeichnet, dass** eine Schaltung (14) vorgesehen ist, die in einem aktiven Modus derart geschaltet ist, dass in definierten Zeitabständen das elektromagnetische Feld aufgebaut und abgebaut wird oder dass eine Schaltung (14) vorgesehen ist, die in einem passiv Modus derart geschaltet ist, dass das elektromagnetische Feld erst dann aufgebaut wird, wenn ein Näherungssensor (50) eine Annäherung an das Kraftfahrzeug (2) sensiert hat, wobei der Näherungssensor (50) elektronisch mit dem Kommunikationsmittel (13) in Datenverbindung steht.

7. Kraftfahrzeug nach Anspruch 6,
**dadurch gekennzeichnet,**
**dass** das Bauteil (40) eine Fensterscheibe (41) des Kraftfahrzeuges (2) ist und/oder dass der Näherungssensor (50) im Bauteil des Kraftfahrzeuges (2) befestigt ist und/oder dass der Näherungssensor (50) ein kapazitiver Sensor ist.

8. Kraftfahrzeug nach Anspruch 6 oder 7, **dadurch gekennzeichnet,**
**dass** eine Handhabe (60) des Kraftfahrzeuges (2) vorgesehen ist, die einen von außen zugänglichen Türgriff (61) und einen Montageträger (62), an dem der Türgriff (61) befestigt ist, innenseitig der Kraftfahrzeugtür (2) aufweist, wobei das Einkoppelelement (20) an der Handhabe (60) angeordnet ist und/oder der Näherungssensor (50) am Türgriff (61) oder an der Fensterscheibe angeordnet ist.

9. Kraftfahrzeug nach einem der Ansprüche 6 bis 8, **dadurch gekennzeichnet,**
**dass** das Kommunikationsmittel (13) derart ausgebildet ist, dass das elektromagnetische Feld durch Induktion erzeugbar ist und/oder dass das Einkoppelelement (20) derart ausgebildet ist, dass ein elektromagnetisches Feld durch Induktion vom Einkoppelelement (20) erzeugbar ist.

10. Kraftfahrzeug nach einem der Ansprüche 6 bis 9, **dadurch gekennzeichnet,**
**dass** der Identifikationsträger eine Sende- und/oder Empfangseinheit (31) aufweist, die in Datenkommunikation mit dem ersten Kommunikationselement (11) der kraftfahrzeugseitigen Kommunikationseinheit (10) bringbar ist, insbesondere dass die Sende- und/oder Empfangseinheit (31) als Spule ausgeführt ist.

11. Kraftfahrzeug nach einem der Ansprüche 6 bis 10, **dadurch gekennzeichnet,**
**dass** das zweite Kommunikationselement (12) dem Einkoppelelement (20) beabstandet gegenüber steht, wobei insbesondere die Fensterscheibe bewegbar innerhalb der Kraftfahrzeugtür (2) angeordnet ist.

12. Kraftfahrzeug nach einem der Ansprüche 6 bis 11 mit einer Kommunikationseinheit (10) nach einem der Ansprüche 1 bis 5.

13. Verfahren für eine Überprüfung einer Zugangsberechtigung eines Kraftfahrzeugs (2), insbesondere einer Berechtigung zum Ver- und Entriegeln einer Kraftfahrzeugtür (3), mit einer Kommunikationseinheit (10) eines Sicherheitssystems (1) eines Kraftfahrzeuges (2), die in Kommunikation mit einem mobilen Identifikationsgeber (30) bringbar ist, mit einem Kommunikationsmittel (13), das ein erstes (11) und ein zweites Kommunikationselement (12) aufweist,
wobei das erste Kommunikationselement (11) an einem sichtbaren Teil (41) des Kraftfahrzeug (2) angeordnet ist und das zweite Kommunikationselement (12) an einem nicht sichtbaren Teil (41) des Kraftfahrzeug (2) angeordnet ist,
einem elektronischen Einkoppelelement (20), das mit einer Leistungsversorgung (15) verbunden ist, wobei das Verfahren folgende Schritte aufweist:
a) Einbringung von Energie über das Einkoppelelement (20) in das zweite Kommunikationselement (12),
b) Übertragung der Energie zum ersten Kommunikationselement (11), das ein elektromagnetisches Feld aufbaut,
c) Datenkommunikation zwischen der Kommunikationseinheit (10) und dem Identifikationsgeber (30), wobei ein vom Identifikationsgeber (30) zur Kommunikationseinheit (10) gesendeter Code ausgewertet wird,
d) bei einem positiven Auswerteergebnis eine Zugangsberechtigung vorliegt und die Kommunikationseinheit (10) ein definiertes Signal dem Sicherheitssystem (1) übergibt,
wobei das zweite Kommunikationselement (12) sowie das Einkoppelelement (20) kontaktlos zueinander angeordnet sind,
wobei ein Näherungssensor (50) vorgesehen ist, der elektronisch mit dem Kommunikationsmittel (13) in Datenverbindung steht, wobei in einem passiv Modus das elektromagnetische Feld erst dann aufgebaut wird, wenn der Näherungssensor (50) eine Annäherung an das Kraftfahrzeug (2) sensiert hat.

14. Verfahren nach Anspruch 13,
**dadurch gekennzeichnet,**
**dass** vor und/oder während Schritt c) der mobile Identifikationsgeber (30) in die Nähe des ersten Kommunikationselementes (11) gehalten wird.

15. Verfahren nach Anspruch 13 oder 14,
**dadurch gekennzeichnet,**
**dass** beim Schritt a) ein elektromagnetisches Feld zwischen dem Einkoppelelement (20) und dem zweiten Kommunikationselement (12) induziert wird.

16. Verfahren nach einem der Ansprüche 13 bis 15,
**dadurch gekennzeichnet,**
**dass** beim Schritt b) ein elektromagnetisches Feld zwischen dem ersten Kommunikationselement (11) und einer Sende- und/oder Empfangseinheit (31) des Identifikationsgebers (30) induziert wird und/oder dass die Kommunikationseinheit (10) eine Schaltung (14) aufweist, die in einem aktiven Modus derart geschaltet ist, dass in definierten Zeitabständen das elektromagnetische Feld aufgebaut und abgebaut wird.

17. Verfahren nach einem der Ansprüche 13 bis 16,
**dadurch gekennzeichnet,**
**dass** die Annäherung kapazitiv erfolgt.

18. Verfahren nach einem der Ansprüche 13 bis 17,
**dadurch gekennzeichnet,**
**dass** während des Schrittes b) die Kommunikationseinheit (10) ein elektromagnetisches Feld erzeugt, wobei der Identifikationsgeber (30), der in das elektromagnetische Feld geführt wird, das elektromagnetische Feld moduliert, wodurch Schritt c) realisierbar ist und/oder dass während des Schrittes b) die Kommunikationseinheit (30) ein elektromagnetisches Feld erzeugt, wobei der Identifikationsgeber (30), der in das elektromagnetische Feld geführt wird, ein elektromagnetisches Feld erzeugt, das der Kommunikationseinheit (10) gesendet wird, wodurch Schritt c) realisierbar ist.

19. Verfahren nach einem der Ansprüche 13 bis 18, mit dem ein Kraftfahrzeug gemäß der Ansprüche 6 bis 12 oder mit dem eine Kommunikationseinheit (10) gemäß der Ansprüche 1 bis 5 betrieben wird.

## Claims

1. Communication unit (10) of a security system (1) of a motor vehicle (2) which can be brought into communication with a mobile identification transmitter (30), having
a communication means (13) comprising a first (11) and a second communication element (12),
an electronic coupling element (20) with which energy can be introduced into the second communication element (12), this energy being transmittable to the first communication element (11), wherein
an electromagnetic field can be established via the first communication element (11), whereby data communication with the mobile identification transmitter (30) can be achieved,
the first communication element (11) is designed in such a way that it can be arranged in a component region (41) of the motor vehicle (2) which is visible to a user, and the second communication element (12) can be fastened in a component region (42) of the motor vehicle (2) which is invisible to the user, wherein it is possible for energy to be introduced into the second communication element (12) via the coupling element (20), the second communication element (12) and the coupling element (20) being arranged without contact with one another,
**characterized**
**in that** a circuit (14) is provided which is switched in an active mode in such a way that the electromagnetic field is built up and reduced at defined time intervals, or
**in that** a circuit (14) is provided which is switched in a passive mode in such a way that the electromagnetic field is only established when a proximity sensor (50) has sensed an approach to the motor vehicle (2), the proximity sensor (50) being electronically connected to the communication means (13) in data communication.

2. Communication unit (10) according to claim 1,
**characterized**
**in that** the first (11) and/or the second communication element (12) and/or the coupling element (20) are each designed as a coil.

3. Communication unit (10) according to claim 1 or 2,
**characterized**
**in that** a proximity sensor (50) is provided which is electronically in data connection with the communication means (13),
in particular in that the proximity sensor (50) can be fastened in the visible component region (41) of the motor vehicle (2) and/or in that the proximity sensor (50) is a capacitive sensor.

4. Communication unit (10) according to one of the preceding claims,
**characterized**
**in that** the electromagnetic field can be generated by induction and/or the energy is introduced into the second communication element (12) by induction.

5. Communication unit (10) according to one of the preceding claims,
**characterized**
**in that** the first communication element (11) has the function of a transmitting and/or receiving unit (31) in order to exchange data via the electromagnetic field and/or in that the communication means (13) is designed in such a way that the electromagnetic field has a range of less than 11 cm, in particular in that data via the electromagnetic field can be transmitted in accordance with an NFC protocol.

6. Motor vehicle (2) having a communication unit (10) of a security system (1) which can be brought into communication with a mobile identification transmitter (30), having
a communication means (13) comprising a first (11) and a second communication element (12),
an electronic coupling element (20) which is connected to a power supply (15) and with which energy can be introduced into the second communication element (12),
said energy being transmittable to said first communication element (11),
wherein an electromagnetic field can be established via the first communication element (11), whereby data communication with the mobile identification transmitter (30) can be achieved,
the first communication element (11) is designed in such a way that it is arranged in a component region (41) of the motor vehicle (2) which is visible to a user, and
the second communication element (12) is fastened in a component region (42) of the motor vehicle (2) which is invisible to the user,
wherein energy can be introduced into the second communication element (12) via the coupling element (20),
the second communication element (12) and the coupling element (20) being arranged without contact with one another,
**characterized**
**in that** a circuit (14) is provided which is switched in an active mode in such a way that the electromagnetic field is built up and reduced at defined time intervals, or
**in that** a circuit (14) is provided which is switched in a passive mode in such a way that the electromagnetic field is only established when a proximity sensor (50) has sensed an approach to the motor vehicle (2),
wherein the proximity sensor (50) is electronically in data communication with the communication means (13).

7. Motor vehicle according to claim 6,
**characterized**
**in that** the component (41) is a window pane (41) of the motor vehicle (2) and/or in that the proximity sensor (50) is fastened in the component of the motor vehicle (2) and/or in that the proximity sensor (50) is a capacitive sensor.

8. Motor vehicle according to claim 6 or 7,
**characterized**
**in that** a handle (60) of the motor vehicle (2) is provided which has a door handle (61) accessible from the outside and a mounting support (62), to which the door handle (61) is fastened, on the inside of the motor vehicle door (2), the coupling element (20) being arranged on the handle (60) and/or the proximity sensor (50) being arranged on the door handle (61) or on the window pane.

9. Motor vehicle according to one of the claims 6 to 8,
**characterized**
**in that** the communication means (13) is designed such that the electromagnetic field can be generated by induction and/or in that the coupling element (20) is designed such that an electromagnetic field can be generated by induction from the coupling element (20).

10. Motor vehicle according to one of the claims 6 to 9,
**characterized**
**in that** the identification carrier has a transmitting and/or receiving unit (31) which can be brought into data communication with the first communication element (11) of the communication unit (10) on the vehicle side, in particular in that the transmitting and/or receiving unit (31) is designed as a coil.

11. Motor vehicle according to one of the claims 6 to 10,
**characterized**
**in that** the second communication element (12) is opposite at a distance from the coupling element (20), in particular the window pane being arranged movably inside the motor vehicle door (2).

12. A motor vehicle in accordance with any of the claims 6 to 11 having a communication unit (10) in accordance with any of the claims 1 to 5.

13. Method for checking an access authorization of a motor vehicle (2), in particular an authorization for locking and unlocking a motor vehicle door (3), with
a communication unit (10) of a security system (1) of a motor vehicle (2) which can be brought into communication with a mobile identification transmitter (30), having
a communication means (13) comprising a first (11) and a second communication element (12),
the first communication element (11) being arranged on a visible part (41) of the motor vehicle (2) and the second communication element (12) being arranged on an invisible part (41) of the motor vehicle (2),
an electronic coupling element (20) connected to a power supply (15), the method comprising the steps of:
a) Introducing energy via the coupling element (20) into the second communication element (12),
b) transmitting the energy to the first communication element (11) which establishes an electromagnetic field,
c) Data communication between the communication unit (10) and the identification provider (30), wherein a code sent from the identification provider (30) to the communication unit (10) is evaluated,
d) an access authorisation is present in the event of a positive evaluation result and the communication unit (10) transmits a defined signal to the security system (1),
the second communication element (12) and the coupling element (20) being arranged without contact with one another,
wherein a proximity sensor (50) is provided which is electronically in data connection with the communication means (13),
wherein in a passive mode the electromagnetic field is not established until the proximity sensor (50) has sensed an approach to the motor vehicle (2).

14. Method according to claim 13,
**characterized**
**in that** the mobile identification transmitter (30) is held in the vicinity of the first communication element (11) before and/or during step c).

15. Method according to claim 13 or 14,
**characterized**
**in that**, in step a), an electromagnetic field is induced between the coupling element (20) and the second communication element (12).

16. Method according to any of claims 13 to 15,
**characterized**
**in that**, in step b), an electromagnetic field is induced between the first communication element (11) and a transmitting and/or receiving unit (31) of the identification transmitter (30) and/or in that the communication unit (10) has a circuit (14) which is connected in an active mode in such a way that the electromagnetic field is built up and reduced at defined time intervals.

17. Method according to any of claims 13 to 16,
**characterized**
that the approach is capacitive.

18. Method according to any of claims 13 to 17,
**characterized**
**in that** during step b) the communication unit (10) generates an electromagnetic field, wherein the identification transmitter (30) guided into the electromagnetic field modulates the electromagnetic field, whereby step c) is feasible and/or
**in that** during step b) the communication unit (10) generates an electromagnetic field, wherein the identification transmitter (30) guided into the electromagnetic field generates an electromagnetic field transmitted to the communication unit (10), whereby step c) is feasible.

19. Method according to any one of claims 13 to 18 for operating a motor vehicle according to claims 6 to 12 or a communication unit (10) according to claims 1 to 5.

## Revendications

1. Unité de communication (10) d'un système de sécurité (1) d'un véhicule automobile (2) qui peut être mis en communication avec un émetteur mobile d'identification (30), comportant
un moyen de communication (13) comprenant un premier (11) et un second élément de communication (12),
un élément de couplage électronique (20) avec lequel de l'énergie peut être introduite dans le deuxième élément de communication (12), cette énergie pouvant être transmise au premier élément de communication (11), où
un champ électromagnétique peut être établi via le premier élément de communication (11), ce qui permet la communication de données avec l'émetteur mobile d'identification (30),
le premier élément de communication (11) est conçu de telle sorte qu'il peut être disposé dans une zone de composant (41) du véhicule automobile (2) qui est visible par un utilisateur, et le second élément de communication (12) peut être fixé dans une zone de composant (42) du véhicule automobile (2) qui est invisible pour l'utilisateur, l'énergie pouvant être introduite dans le second élément de communication (12) via l'élément de couplage (20), le second élément de communication (12) et l'élément de couplage (20) étant disposés sans contact mutuel,
**caractérise**
**en ce qu'**il est prévu un circuit (14) qui est commuté en mode actif de telle sorte que le champ électromagnétique est créé et réduit à intervalles de temps définis, ou
**en ce qu'**il est prévu un circuit (14) qui est commuté en mode passif de telle sorte que le champ électromagnétique n'est établi que lorsqu'un capteur de proximité (50) a détecté une approche du véhicule automobile (2), le capteur de proximité (50) étant connecté électroniquement aux moyens de communication (13) en communication de données.

2. Unité de communication (10) selon la revendication 1,
**caractérise**
**en ce que** le premier (11) et/ou le deuxième élément de communication (12) et/ou l'élément de couplage (20) sont chacun conçus comme une bobine.

3. Unité de communication (10) selon la revendication 1 ou 2,
**caractérise**
**en ce qu'**il est prévu un capteur de proximité (50) qui est électroniquement en communication de données avec le moyen de communication (13),
en particulier en ce que le capteur de proximité (50) peut être fixé dans la zone de composant (41) du véhicule automobile (2) et/ou en ce que le capteur de proximité (50) est un capteur capacitif.

4. Unité de communication (10) selon l'une des revendications précédentes,
**caractérise**
**en ce que** le champ électromagnétique peut être généré par induction et/ou l'énergie est introduite dans le deuxième élément de communication (12) par induction.

5. Unité de communication (10) selon l'une des revendications précédentes,
**caractérise**
**en ce que** le premier élément de communication (11) a la fonction d'une unité d'émission et/ou de réception (31) pour échanger des données sur le champ électromagnétique et/ou en ce que le moyen de communication (13) est conçu de telle sorte que le champ électromagnétique a une portée inférieure à 11 cm, notamment en ce que les données sur le champ électromagnétique peuvent être transmises selon un protocole NFC.

6. Véhicule automobile (2) comportant une unité de communication (10) d'un système de sécurité (1) qui peut être mise en communication avec un émetteur mobile d'identification (30), comportant
un moyen de communication (13) comprenant un premier (11) et un second élément de communication (12),
un élément de couplage électronique (20) qui est relié à une alimentation électrique (15) et avec lequel de l'énergie peut être introduite dans le deuxième élément de communication (12),
ladite énergie pouvant être transmise au premier élément de communication (11),
dans laquelle un champ électromagnétique peut être établi par l'intermédiaire du premier élément de communication (11), la communication de données avec l'émetteur mobile d'identification (30) pouvant ainsi être réalisée,
le premier élément de communication (11) est conçu de telle sorte qu'il est disposé dans une zone de composant (41) du véhicule automobile (2) qui est visible par un utilisateur, et
le deuxième élément de communication (12) est fixé dans une zone de composant (42) du véhicule automobile (2) qui est invisible pour l'utilisateur,
dans laquelle de l'énergie peut être introduite dans le deuxième élément de communication (12) via l'élément de couplage (20),
le deuxième élément de communication (12) et l'élément de couplage (20) étant disposés sans contact l'un avec l'autre,
**caractérise**
**en ce qu'**il est prévu un circuit (14) qui est commuté en mode actif de telle sorte que le champ électromagnétique est créé et réduit à intervalles de temps définis, ou
**en ce qu'**il est prévu un circuit (14) qui est commuté en mode passif de telle sorte que le champ électromagnétique ne soit établi que lorsqu'un capteur de proximité (50) a détecté une approche du véhicule automobile (2),
dans laquelle le capteur de proximité (50) est électroniquement en communication de données avec le moyen de communication (13).

7. Véhicule automobile selon la revendication 6,
**caractérise**
**en ce que** le composant (41) est une vitre de fenêtre (41) du véhicule automobile (2) et/ou en ce que le capteur de proximité (50) est fixé dans le composant du véhicule automobile (2) et/ou en ce que le capteur de proximité (50) est un capteur capacitif.

8. Véhicule automobile selon la revendication 6 ou 7,
**caractérise**
**en ce qu'**il est prévu une poignée (60) du véhicule automobile (2) qui présente une poignée de porte (61) accessible de l'extérieur et un support de montage (62) sur lequel est fixée la poignée de porte (61) à l'intérieur de la porte (2) du véhicule automobile, l'élément de couplage (20) étant disposé sur la poignée (60) et/ou le capteur de proximité (50) étant disposé sur la poignée (61) ou sur le vitre de fenêtre.

9. Véhicule automobile selon l'une des revendications 6 à 8,
**caractérise**
**en ce que** le moyen de communication (13) est conçu de telle sorte que le champ électromagnétique peut être généré par induction et/ou en ce que l'élément de couplage (20) est conçu de telle sorte qu'un champ électromagnétique peut être généré par induction de l'élément de couplage (20).

10. Véhicule automobile selon l'une des revendications 6 à 9,
**caractérise**
**en ce que** le support d'identification comporte une unité d'émission et/ou de réception (31) qui peut être amenée en communication de données avec le premier élément de communication (11) de l'unité de communication (10) côté véhicule automobile, en particulier en ce que l'unité d'émission et/ou de réception (31) est conçue comme une bobine.

11. Véhicule automobile selon l'une des revendications 6 à 10,
**caractérise**
**en ce que** le deuxième élément de communication (12) est opposé à distance de l'élément de couplage (20), en particulier la vitre de fenêtre étant disposée de manière mobile dans la porte (2) du véhicule automobile.

12. Véhicule automobile selon l'une quelconque des revendications 6 à 11 ayant une unité de communication (10) selon l'une quelconque des revendications 1 à 5.

13. Procédé de vérification d'une autorisation d'accès d'un véhicule automobile (2), en particulier d'une autorisation de verrouillage et de déverrouillage d'une porte de véhicule automobile (3), avec
une unité de communication (10) d'un système de sécurité (1) d'un véhicule automobile (2) qui peut être mise en communication avec un émetteur mobile d'identification (30), comportant
un moyen de communication (13) comprenant un premier (11) et un second élément de communication (12),
le premier élément de communication (11) étant disposé sur une partie visible (41) du véhicule automobile (2) et le second élément de communication (12) étant disposé sur une partie invisible (41) du véhicule automobile (2),
un élément de couplage électronique (20) relié à une alimentation électrique (15), le procédé comprenant les étapes suivantes:
a) L'introduction d'énergie par l'intermédiaire de l'élément de couplage (20) dans le deuxième élément de communication (12),
b) transmettre l'énergie au premier élément de communication (11) qui établit un champ électromagnétique,
c) communication de données entre l'unité de communication (10) et l'émetteur mobile d'identification (30), dans laquelle un code envoyé par l'émetteur mobile d'identification (30) à l'unité de communication (10) est évalué,
d) une autorisation d'accès est présente en cas de résultat d'évaluation positif et l'unité de communication (10) transmet un signal défini au système de sécurité (1),
le deuxième élément de communication (12) et l'élément de couplage (20) étant disposés sans contact l'un avec l'autre,
dans laquelle il est prévu un capteur de proximité (50) qui est électroniquement en communication de données avec le moyen de communication (13),
dans laquelle, dans un mode passif, le champ électromagnétique n'est pas établi tant que le capteur de proximité (50) n'a pas détecté une approche du véhicule automobile (2).

14. Procédé selon la revendication 13,
**caractérise**
**en ce que** l'émetteur mobile d'identification (30) est maintenu à proximité du premier élément de communication (11) avant et/ou pendant l'étape c).

15. Procédé selon la revendication 13 ou 14,
**caractérise**
**en ce que**, pendant l'étape a), un champ électromagnétique est induit entre l'élément de couplage (20) et le second élément de communication (12).

16. Procédé selon l'une quelconque des revendications 13 à 15,
**caractérise**
**en ce que**, pendant l'étape b), un champ électromagnétique est induit entre le premier élément de communication (11) et une unité d'émission et/ou de réception (31) du l'émetteur mobile d'identification (30) et/ou en ce que l'unité de communication (10) présente un circuit (14) qui est relié dans un mode actif de telle sorte que le champ électromagnétique est créé et réduit à intervalles de temps définis.

17. Procédé selon l'une quelconque des revendications 13 à 16,
**caractérise**
**en ce que** l'approche est capacitive.

18. Procédé selon l'une quelconque des revendications 13 à 17,
**caractérise**
**en ce que** pendant l'étape b), l'unité de communication (10) génère un champ électromagnétique,
dans laquelle l'émetteur mobile d'identification (30) guidé dans le champ électromagnétique module le champ électromagnétique, l'étape c) étant réalisable et/ou en ce que pendant l'étape b), l'unité de communication (10) génère un champ électromagnétique,
dans laquelle l'émetteur mobile d'identification (30) guidé dans le champ électromagnétique génère un champ électromagnétique transmis à l'unité de communication (10), l'étape c) étant réalisable.

19. Procédé selon l'une quelconque des revendications 13 à 18 pour faire fonctionner un véhicule automobile selon les revendications 6 à 12 ou une unité de communication (10) selon les revendications 1 à 5.
